# EUROPÄISCHE PATENTANMELDUNG

(11) **EP 4 331 913 A1**
(43) Veröffentlichungstag der Anmeldung: **06.03.2024**
(21) Anmeldenummer: 22192829.4
(22) Anmeldetag: 30.08.2022
(51) Int. Cl.: B60P 7/15, B60P 7/08

(54) **TELESKOPIERBARE LADUNGSSICHERUNGSRUNGE**

(71) Anmelder: Fliegl, Helmut, 07819 Triptis (DE)
(72) Erfinder: Fliegl, Helmut, 07819 Triptis (DE)
(74) Vertreter: Kramer Barske Schmidtchen Patentanwälte PartG mbB

(57) **Zusammenfassung**

Die Ladungssicherungsrunge (1) schafft eine flexible Fixiermöglichkeit für Anschlagmittel (5) zur Sicherung von Ladung (10) in einem Laderaum (15) eines Nutzfahrzeugaufbaus (20) eines Nutzfahrzeugs. Die Ladungssicherungsrunge (1) weist einen unteren Rungenteil (25) und einen oberen Rungenteil (30) auf. Das untere Rungenteil (25) weist an einem unteren Endbereich (26) ein unteres Befestigungselement (27) zum lösbaren Befestigen im Bereich des Ladebodens (70) des Nutzfahrzeugaufbaus (20) auf. Das obere Rungenteil weist an einem oberen Endbereich (31) ein oberes Befestigungselement (32) zum lösbaren Befestigen im Bereich des Dachs (65) des Nutzfahrzeugaufbaus (20) auf. Das untere Rungenteil (25) und das obere Rungenteil (30) sind zueinander teleskopierbar angeordnet und halten in allen Teleskopstellungen einer Mindestquerlast von 450 daN bis mindestens 10.000 daN, insbesondere von 800 daN bis 2.500 daN stand. Das obere Rungenteil (30) und/oder das untere Rungenteil (25) weisen wenigstens eine Lochreihe (35) mit mehreren Anschlaglöchern (36) auf, in die ein oder mehrere Anschlagmittel (5) wie z.B. Lattentaschen, Einhakösen oder dergleichen lösbar befestigbar sind.

## Beschreibung

### Technisches Gebiet

Die vorliegende Erfindung betrifft eine teleskopierbare Ladungssicherungsrunge, die eine flexible Fixiermöglichkeit für Anschlagmittel zur Sicherung von jeglicher Ladung in einem Laderaum eines Nutzfahrzeugaufbaus eines Nutzfahrzeugs schafft.

Ferner betrifft die Erfindung ein Anschlagmittel, das zum lösbaren Befestigen an einer erfindungsgemäßen Ladungssicherungsrunge ausgebildet ist, und ein Ladungssicherungssystem, das wenigstens eine erfindungsgemäße Ladungssicherungsrunge und wenigstens ein hieran lösbar befestigbares Anschlagmittel gemäß der vorliegenden Erfindung umfasst.

Schließlich betrifft die Erfindung ein Nutzfahrzeug, das ein hier offenbartes Ladungssicherungssystem und einen Nutzfahrzeugaufbau umfasst. Der Nutzfahrzeugaufbau weist im Bereich des Ladebodens und im Dachbereich Aufnahmeeinrichtungen auf, die zum lösbaren Befestigen der wenigstens einen Ladungssicherungsrunge ausgebildet sind.

### Hintergrund

Ladungssicherung bezeichnet das Sichern von Ladungen bzw. Frachtgütern im Straßen-, Eisenbahn-, Luft- und Schiffsverkehr gegen die beim Transport auftretenden physikalischen Bewegungskräfte und erhöht die Transportsicherheit. Diese Kräfte treten beispielsweise im Straßentransport beim Beschleunigen nach hinten, beim Bremsen aufgrund der Massenträgheit in Fahrtrichtung, beim Durchfahren von Kurven zu den Seiten und auf unebenen Straßen aufgrund der Gravitation auf. Ladungsgüter, die ungenügend oder falsch angebracht sind, sowie fehlende Ladungssicherung führen häufig zu einer unerwünschten Verschiebung bzw. Verlust der Ladung.

Gemäß §22 der deutschen Straßenverkehrsordnung ist vorgeschrieben, dass die Ladungen bzw. das Ladungsgüter so zu verstauen und zu sichern sind, dass sie selbst bei Vollbremsung oder plötzlichen Ausweichbewegungen nicht verrutschen, umfallen, hin- und her rollen, herabfallen oder vermeidbaren Lärm erzeugen können. Dabei sind die anerkannten Regeln der Technik zu beachten. Hierzu geben beispielsweise die VDI-Richtlinien 2700 ff. bewährte Regeln an. Die Verantwortung der Ladungssicherung liegt beim Fahrer, Halter und beim Verlader.

Es wird generell zwischen kraftschlüssigen und formschlüssigen Ladungssicherungen unterschieden. Die kraftschlüssige Ladungssicherung wird durch Niederzurren begründet. Hierbei wird das Ladungsgut beispielsweise mittels Zurrgurten auf die Ladefläche gedrückt und dadurch die Reibungskraft erhöht, um letztlich ein Verrutschen des Ladungsguts zu verhindern. Dabei können z. B. "Antirutschmatten" diesen Effekt verstärken, die unter das Ladungsgut gelegt werden.

Die formschlüssige Ladungssicherung begründet sich dadurch, dass das Ladungsgut entweder durch bündiges, lückenloses Verladen oder mittels Schräg- oder Diagonalzurren gesichert wird. Eine alleinige Ladungssicherung durch Formschluss ohne weiteres Niederzurren ist nur dann zulässig, wenn der Fahrzeugaufbau eine entsprechende Stabilität aufweist, um die auftretenden Kräfte aufzunehmen. Beispielsweise sind gemäß der VDI-Richtlinie 2700 80 % des Ladungsgewichtes nach vorn zu sichern.

Als Beispiele für Ladungssicherungsvorrichtungen sind Zurrgurte, Zurrdrahtseile, Zurrketten, rutschhemmende Matten, Antirutschhölzer, Keile, Kantenschutz, Ladungssicherungsnetze, Ankerschienen in Verbindung mit Lade- und Sperrbalken, Zurrschienen und andere Zurrpunkte, Staupolster oder Stauholz zu nennen, die häufig aufwändig und nur mühsam zum Sichern des Ladungsguts verwendet werden können.

Zu Zwecken der Ladungssicherung müssen Ladungssicherungsvorrichtungen wie Zurrgurte, Zurrdrahtseile, Zurrketten, Ladungssicherungsnetze, Ankerschienen, Lade- und Sperrbalken, Zurrschienen irgendwo im Laderaum verankert werden. Hierzu gibt es insbesondere im Bereich des Ladebodens horizontale Lochleisten. Es sind auch aufrechtstehende Steckrungen bekannt, die in Löcher im Ladeboden eingesteckt werden und selbst wiederum Löcher aufweisen, um Zurrgurte oder dergleichen einzuhängen.

In der DE 20 2005 017 458 U1 ist eine Runge für einen Nutzfahrzeug- oder Anhängerdachaufbau gezeigt, die in einem Dachprofil verschiebbar ist. Die Runge umfasst einen Laufwagengrundkörper, der durch ein abgewinkeltes Blechprofil gebildet ist. Der Rungengrundkörper soll einfach aufgebaut und mit einem ebenfalls einfach bauenden Laufwagen bestückbar sein. Ferner soll ein Austausch von Laufrollen n einfacher Weise ermöglicht sein.

Eine weitere verschiebbar gelagerte Runge für ein Transportfahrzeug oder einen Transportbehälter ist in der DE 20 2006 009 168 U1 gezeigt. Eine gelenkige Verbindung zwischen dem Rungenkörper und dem Laufwagen mittels Gelenklager soll eine Schwenkbeweglichkeit relativ zum Laufwagen sowohl in Längsrichtung als auch in Querrichtung einer Laufschiene schaffen.

Die EP 1 787 842 A2 lehrt eine Runge für einen Planenaufbau. Bei dieser Runge ist eine Hubeinrichtung vorhanden, bei der mittels eines Betätigungshebels die Rungenlänge veränderbar ist. Die Veränderung der Rungenlänge wird ermöglicht, indem eine Verzahnung an einem Rungenteil vorhanden ist, die ein dem Betätigungshebel zugeordnetes Eingriffsende ansetzen kann.

Bei der in der DE 20 2008 009 871 U1 gezeigten Runge mit Riegeleinrichtung an einem Rungenfuß ist der Rungenfuß mit Riegeleinrichtung am Rungenschuh verriegelbar und an einem relativ zur Runge verschwenkbaren Riegelhebel eine Riegelnase ausgebildet, die in eine korrespondierende Ausnehmung im Rungenschuh in Eingriff bringbar ist. Am Rungenschuh und am Rungenfuß sind in gegenseitigen Eingriff bringbare Führungen ausgebildet.

Die EP 1 587 728 B2 zeigt eine Runge mit integrierter Vorrichtung zur Ladungssicherung. Diese hierin gezeigte Runge ist verschiebbar ausgebildet und weist eine längenseitliche Sicherung auf. Hierzu sind bevorzugt an beiden Seitenflächen eines geradlinigen Mittelabschnitts der Runge eine etwa gleiche Anzahl an schlaufenförmigen Auskragungen ausgebildet. Vorzugsweise sind die Auskragungen angeschweißt. Dadurch soll bei formschlüssiger Verladung in vorteilhafter Weise verhindert werden, dass kinetische Energie frei wird und es zwangsläufig zur Verformung des Aufbaus kommen kann.

Eine Runge zum Einbau zwischen einem Obergurt und einem Gestellrahmen eines Fahrzeugs ist in der DE 296 14 477 U1 gezeigt. Diese verschiebbare Runge weist eine Arretierungsvorrichtung am unteren Rungenende auf.

Auch die DE 697 07 892 T2 zeigt eine verschiebbare Runge mit Klemmvorrichtung.

Aus der EP 1 145 938 A1 ist eine Steckverbindung zwischen einer Bretttasche und einer Runge für ein Nutzfahrzeug gezeigt. Die Runge weist eine Lochreihe mit trapezförmigen Löchern auf, in die auf einer Rückseite der Bretttasche als Nasen ausgebildete Haken eingehängt werden.

Aus der DE 10 2006 004 994 B3 ist ein Rungensystem für Nutzfahrzeugaufbauten bekannt, bei dem als Planlattentaschen bezeichnete Bretttaschen mit definierten Lochbildern versehen sind, um diese an einer Runge in gewünschter Höhe lösbar befestigen zu können.

Aus der US 2013/0240471 A1 ist ein Regalsystem bekannt, bei dem Querstreben zur Halterung von Regalböden in schlüssellochförmige Löcher, die in einem Regalfuß ausgebildet sind, eingehängt werden können.

Die EP 1 787 842 A2 lehrt eine Runge für einen Planenaufbau. Bei dieser Runge ist eine Hubeinrichtung vorhanden, bei der mittels eines Betätigungshebels die Rungenlänge veränderbar ist. Die Veränderung der Rungenlänge wird ermöglicht, indem eine Verzahnung an einem Rungenteil vorhanden ist, die ein dem Betätigungshebel zugeordnetes Eingriffsende ansetzen kann.

Der Erfindung liegt das technische Problem zugrunde, ein verbessertes Ladungssicherungssystem bereitzustellen.

### Zusammenfassung der vorliegenden Erfindung

Gemäß einem ersten Aspekt der vorliegenden Erfindung wird dieses technische Problem mit einer Ladungssicherungsrunge gelöst. Die Ladungssicherungsrunge schafft eine flexible Fixiermöglichkeit für ein oder mehrere Anschlagmittel zur Sicherung von Ladung in einem Laderaum eines Nutzfahrzeugaufbaus eines Nutzfahrzeugs. Die erfindungsgemäße Ladungssicherungsrunge umfasst ein unteres Rungenteil, das an einem unteren Endbereich ein unteres Befestigungselement zum lösbaren Befestigen im Bereich des Ladebodens des Nutzfahrzeugaufbaus aufweist. Ferner umfasst die Ladungssicherungsrunge ein oberes Rungenteil, das an einem oberen Endbereich ein oberes Befestigungselement zum lösbaren Befestigen im Bereich des Dachs des Nutzfahrzeugaufbaus aufweist. Das untere Rungenteil und das obere Rungenteil sind zueinander teleskopierbar angeordnet und halten in allen Teleskopstellungen einer Mindestquerlast/Belastung von 450 daN (dekaNewton) bis 10.000 daN (dekaNewton), vorzugsweise 800 daN (dekaNewton) bis 2.500 daN (dekaNewton) stand.

Das obere Rungenteil und/oder das untere Rungenteil weist wenigstens eine Lochreihe mit mehreren Anschlaglöchern auf, in die ein oder mehrere Anschlagmittel wie z.B. Lattentaschen, Einhakösen oder dergleichen lösbar befestigbar sind.

Die Ladungssicherungsrunge kann individuell an unterschiedlichen Positionen eines Nutzfahrzeugaufbaus lösbar befestigt werden.

Die Ladungssicherungsrunge ist beispielsweise über das untere Befestigungselement an einer Bodenanschlagleiste des Nutzfahrzeugaufbaus befestigt und über das obere Befestigungselement an einer Dachanschlagleiste des Nutzfahrzeugaufbaus befestigt. In diesem Fall ist die Ladungssicherungsrunge in vertikaler Richtung ausgerichtet.

Die Ladungssicherungsrunge kann alternativ über das untere Befestigungselement und das obere Befestigungselement derart befestigt werden, dass die Ladungssicherungsrunge in horizontaler Richtung ausgerichtet ist. In diesem Fall kann die Ladungssicherungsrunge beispielsweise an Komponenten von bekannten Ladungssicherungssystemen befestigt werden, welche bereits auf dem Nutzfahrzeugaufbau installiert sind, um die Ladung in dem Laderaum zu sichern. Auf diese Weise können bekannten Ladungssicherungssysteme durch die erfindungsgemäße Ladungssicherungsrunge einfach nachgerüstet und in ihrer Funktionalität erweitert bzw. verbessert werden.

Ebenso ist es möglich, die Ladungssicherungsrunge über das untere Befestigungselement und das obere Befestigungselement an weiteren erfindungsgemäßen Ladungssicherungsrungen, die bereits in horizontaler Ausrichtung innerhalb des Nutzfahrzeugaufbaus befestigt sind, zu befestigen.

Beispielsweise kann die die erfindungsgemäße Ladungssicherungsrunge auf diese Weise zur Herstellung einer Ladungssicherungswand verwendet werden. Die Ladungssicherungswand kann zum Beispiel drei Ladungssicherungsrungen aufweisen, wobei zwei Ladungssicherungsrungen in vertikaler Ausrichtung beidseitig auf je einer Seite des Nutzfahrzeugaufbaus angeordnet sind und eine Ladungssicherungsrunge horizontal zwischen diesen beiden (vertikalen) Ladungssicherungsrungen eingespannt ist (befestigt ist).

Das untere Befestigungselement und/oder das obere Befestigungselement können beispielsweise pilzförmig oder hakenförmig oder L-förmig ausgebildet sein. Derartig ausgebildete Befestigungselemente können an einem entsprechenden Gegenstück dadurch befestigt werden, dass sie in eine Öffnung hineinragen bzw. eingreifen. Die Öffnung kann zum Beispiel in einer Dachanschlagleiste oder einer Bodenanschlagleiste es Nutzfahrzeugaufbaus vorgesehen sein. Beispielsweise kann das Befestigungselement auch in eine Öffnung hineinragen bzw. eingreifen, welche sich an einer Komponente eines bekannten Ladungssicherungssystems befindet. Das Befestigungselement kann auch in eine Öffnung einer weiteren erfindungsgemäßen Ladungssicherungsrunge hineinragen bzw. eingreifen, so dass mehrere erfindungsgemäße Ladungssicherungsrungen miteinander verbunden sind.

Eine erfindungsgemäße Ladungssicherungsrunge kann ein oder mehrere obere Befestigungselemente und ein oder mehrere untere Befestigungselemente aufweisen. Beispielsweise kann die Ladungssicherungsrunge zwei obere und zwei untere Befestigungselemente aufweisen.

Das untere Befestigungselement und/oder das obere Befestigungselement können auch U-förmig ausgebildet sein. Im Folgenden wird anhand des unteren Befestigungselements die U-förmige Ausführung beschrieben. Natürlich gelten die Ausführungen entsprechend für das obere Befestigungselement.

Das untere Befestigungselement kann zum Beispiel ein nach unten geöffnetes U-Profil aufweisen. Im montierten Zustand ist das U-Profil von oben auf die Bodenanschlagleiste aufgesetzt. Eine Fixierung des U-Profils auf der Bodenanschlagleiste kann durch eine kraftschlüssige Verbindung erreicht werden. So kann das U-Profil beispielsweise auf die Bodenanschlagleiste gedrückt (verspannt) werden. Zusätzlich oder alternativ zu einer solchen kraftschlüssigen Verbindung kann das U-Profil über eine formschlüssige Verbindung mit der Bodenanschlagleiste verbunden werden. So können beispielsweise das U-Profil und/oder das Bodenanschlagleiste so ausgebildet sein, dass die sich berührenden Flächen ineinandergreifende Profilelemente aufweisen.

Alternativ kann das untere Befestigungselement auch in Form eines zur Seite geöffneten U-Profils, das seitlich auf die Bodenanschlagleiste aufgesetzt ist (das die Bodenanschlagleiste seitlich umgreift), ausgebildet sein.

Gemäß einer weiteren beispielhaften Ausführungsform ist das untere und/oder das obere Befestigungselement so ausgebildet, dass es entlang der Bodenanschlagleiste bzw. der Dachanschlagleiste in horizontaler Richtung verschiebbar ist. Mit Bezug auf das untere Befestigungselement kann beispielsweise ein U-Profil verwendet werden, welches auf der Bodenanschlagleiste in horizontaler Richtung (wie ein Schlitten) verschiebbar ist. Über das Aufbringen von Druck oder andere bekannte Fixiereinrichtungen (wie z.B. Fixierschrauben) kann das U-Profil an beliebiger Position an der Bodenanschlagleiste fixiert (verspannt) werden. Die Ladungssicherungsrunge kann so flexible verschoben und angeordnet werden.

Das untere Rungenteil und das obere Rungenteil sind zueinander teleskopierbar angeordnet und halten in allen Teleskopstellungen einer Mindestquerlast/Belastung von 450 daN bis 10.000 daN (dekaNewton), insbesondere von 800 daN bis 2.500 daN (dekaNewton) stand.

Für die Prüfung der Mindestquerlast/Belastung der Ladungssicherungsrunge wird die Ladungssicherungsrunge auf einer Testanlage mit der vom Hersteller angegebenen maximalen verstellbaren Länge montiert. Die Ladungssicherungsrunge wird dabei an dem oberen Befestigungselement und an dem unteren Befestigungselement fest eingespannt (jeweils ein Festlager am oberen und am unteren Ende). Die Festlager fixieren das obere und das untere Befestigungselement derart, dass sich diese nicht frei bewegen können. Mittig zwischen den beiden Lagern wird dann eine Kraft (Querlast/Belastung) auf die Ladungssicherungsrunge senkrecht zur Längsrichtung der Ladungssicherungsrunge aufgebracht. Die Kraft wird über ein U-förmiges Profil aufgebracht. Das U-Profil hat eine Auflagenlänge von 200-300 mm, insbesondere 300 mm. Bei einer Prüfung wird die Prüfkraft über diese sich in Rungenlängsrichtung erstreckende Auflagenlänge von insbesondere 300 mm auf die Runge aufgebracht.

Wenn eine Kraft (Querlast/Belastung) von 450 daN bis 10.000 daN, insbesondere 800 daN bis 2.500 daN auf die Ladungssicherungsrunge aufgebracht wird, darf die maximale plastische Verformung der erfindungsgemäßen Ladungssicherungsrunge 30 mm, insbesondere 20 mm, nicht überschreiten.

Gemäß einer bevorzugten Prüfungsmethode darf die horizontale Verschiebung des U-förmigen Profils (senkrecht zur Längsrichtung der Ladungssicherungsrunge) während des Tests 300 mm nicht überschreiten.

Gemäß einer weiteren bevorzugten Prüfungsmethode wird die maximale Prüfkraft mindestens 10 Sekunden lang auf die Ladungssicherungsrunge aufgebracht.

Abhängig von nationalen Anforderungen an die Prüfungsmethoden, kann die Prüfung der Mindestquerlast / Belastung der Ladungssicherungsrunge auch derart durchgeführt werden, dass die Ladungssicherungsrunge an einem der beiden Befestigungselemente fest eingespannt ist (Festlager) und an dem anderen der beiden Befestigungselemente so eingespannt ist, dass sich das entsprechende Befestigungselement in Längsrichtung der Ladungssicherungsrunge frei bewegen kann. Die sonstigen oben aufgezeigten Prüfkriterien bleiben unverändert.

Die Anschlaglöcher können als Öffnungen in Schlüssellochform oder in Schlitzform oder als jedwede Aufnahmeöffnung zur Aufnahme von Einhängeelementen in Hakenform, pilzförmigen Befestigungen, Bolzen mit Nut, Dreh-/Steckverbindungen etc. ausgebildet sein.

Gemäß einem weiteren Aspekt der vorliegenden Erfindung wird das technische Problem mit einem Anschlagmittel gelöst, welches eine Ringöse und wenigstens ein mit der Ringöse fest verbundenes Einhängeelement aufweist. Das Einhängeelement ist zum lösbaren Ein- und Aushängen in ein Anschlagloch einer erfindungsgemäßen Ladungssicherungsrunge ausgebildet.

Gemäß einem weiteren Aspekt der vorliegenden Erfindung wird das technische Problem mit einem Ladungssicherungssystem gelöst. Das Ladungssicherungssystem weist wenigstens eine erfindungsgemäße Ladungssicherungsrunge und wenigstens ein erfindungsgemäßes Anschlagmittel auf.

Bei der Verwendung von mehreren erfindungsgemäßen Ladungssicherungsrungen lassen sich auch mehrstöckige Ladungssicherungssysteme bzw. Ladungssicherungswände realisieren. Derartige mehrstöckige Ladungssicherungssysteme bzw. Ladungssicherungswände entstehen durch das miteinander Befestigen von mehreren Ladungssicherungsrungen. Eine Ladungssicherungswand kann zum Beispiel drei Ladungssicherungsrungen aufweisen, wobei zwei Ladungssicherungsrungen in vertikaler Ausrichtung beidseitig auf je einer Seite des Nutzfahrzeugaufbaus angeordnet sind und eine Ladungssicherungsrunge horizontal zwischen diesen beiden (vertikalen) Ladungssicherungsrungen eingespannt ist (befestigt ist).

Gemäß einem weiteren Aspekt der vorliegenden Erfindung wird das technische Problem mit einem Nutzfahrzeug mit einem Ladeboden, einem Dach und wenigstens einer erfindungsgemäßen Ladungssicherungsrunge gelöst. An den Längsseiten des Ladebodens sind eine oder mehrere Bodenanschlagleisten (Palettenanschlagleisten) mit Bodenanschlagleistenlöchern vorhanden. An den Längsseiten des Daches sind ein oder mehrere Dachanschlagleisten (Dachholme) mit Dachanschlagleistenlöcher vorhanden. Vorzugsweise sind die Löcher in der Dachanschlagleiste und in der Bodenanschlagleiste in regelmäßigem Abstand zueinander vorgesehen. Das untere Befestigungselement der Ladungssicherungsrunge ist zum lösbaren Befestigen in einem der Bodenanschlagleistenlöcher ausgebildet und das obere Befestigungselement der Ladungssicherungsrunge ist zum lösbaren Befestigen in einem der Dachanschlagleistenlöcher ausgebildet.

Gemäß einem weiteren Aspekt der vorliegenden Erfindung wird eine Wand eines Nutzfahrzeugs bereitgestellt, die eine obere Lochreihe und eine untere Lochreihe aufweist. Die obere und die untere Lochreihe weist Löcher (Öffnungen) auf, die dazu ausgebildet sind, dass eine Ladungssicherungsrunge in einer Ruhendstellung an diesen Öffnungen fixiert und mitgeführt werden können. Die Wand kann beispielsweise eine Seitenwand oder eine Hecktür des Nutzfahrzeugs sein. Die Wand kann integral mit beispielsweise der Seitenwand oder der Hecktür ausgebildet sein oder in Form eines Panels als zusätzliches Bauteil mit der Seitenwand oder der Hecktür des Nutzfahrzeugs verbunden sein.

Gemäß einer beispielhaften Ausführungsform sind an der Innenseite der Hecktür (Hecktüren) des Nutzfahrzeugaufbaus Öffnungen vorgesehen sein, welche im oberen Türbereich etwa auf Höhe der Dachanschlagleistenlöcher vorgesehen sind und im unteren Türbereich etwa auf Höhe der Bodenanschlagleistenlöcher vorgesehen sind.

Der Erfindung liegt der Gedanke zugrunde, eine absolut flexible Möglichkeit zum Fixieren von Anschlagmitteln zur Ladungssicherung bereitzustellen. Mit der Erfindung wird erstmals eine Ladungssicherungsrunge bereitgestellt, die flexible an unterschiedlichen Positionen des Nutzfahrzeugaufbaus in vertikaler und auch in horizontaler Ausrichtung befestigt werden kann. Die Ladungssicherungsrunge kann mithilfe von Zug- oder von Druckkraft zur Befestigung verspannt werden.

Gleiches gilt für die einfache Entnahme dieser neuartigen Ladungssicherungsrungen in Verbindung mit der Bereitstellung der gesamten Nutzfahrzeugbeladebreite (ohne störende Schiebe-Rungen im links- oder rechtsseitigen Bereich). Weiterhin kann die vorliegend Ladungssicherungsrunge bzw. das erfindungsgemäße Ladungssicherungssystem bei bereits auf dem Nutzfahrzeugboden vorhandener Ladung nachträglich angebracht werden und es existiert kein Zusammenspiel zwischen Ladungssicherungsrunge und Seitenplane. Ladegüter unterschiedlicher Höhe, Breite etc. können durchgängig form- bzw. kraftschlüssig auf dem Nutzfahrzeug gesichert werden.

Die Erfindung ermöglicht es durch den Einsatz mehrerer Ladungssicherungsrungen nebst Anschlagmitteln existiert die Option eines ladungssicherheitstechnisch-optimalen "Umschließens" der Transportgüter. Beispielsweise kann die Ladung mithilfe von Spanngurten, die an den Anschlagmitteln befestigt werden, gesichert werden. Die Anschlagmittel sind lösbar an der Ladungssicherungsrunge befestigbar. Die Ladungssicherungsrunge ist an einem oberen Endbereich im Bereich des Dachs eines Nutzfahrzeugaufbaus lösbar befestigbar und an einem unteren Endbereich im Bereich des Bodens eines Nutzfahrzeugs lösbar befestigbar. Vorzugsweise erstreckt sich die Ladungssicherungsrunge im Gebrauchszustand in vertikaler Richtung bzw. in horizontaler Richtung (quer über dem Ladeboden). Beispielsweise ist die Ladungssicherungsrunge an dem oberen Endbereich an einer Dachanschlagleiste, die an einer Längsseite des Dachs des Nutzfahrzeugaufbaus vorhanden ist, befestigt und an dem unteren Endbereich an einer Bodenanschlagleiste, die an einer Längsseite des Bodens des Nutzfahrzeugaufbaus vorhanden ist, befestigt. Alternativ kann die Ladungssicherungsrunge auch zwischen zwei Ladungssicherungsrungen in horizontaler Ausrichtung befestigt werden.

Ein entscheidender Vorteil dieser Ladungssicherungsrunge wird dadurch repräsentiert, dass der "Festsitz" der Spanngurte zu jedem Zeitpunkt bei jeglicher Beladungssituation durch Öffnen der Plane inkl. nachträgliche Fixierung / Verspannung der Spanngurte stattfinden kann.

Die Ladungssicherungsrunge und das Anschlagmittel sind so ausgebildet, dass das Anschlagmittel in Längsrichtung der Ladungssicherungsrunge (das kann die vertikale Richtung oder die horizontale Richtung bezogen auf den Nutzfahrzeugaufbau je nach Einbauzustand der Ladungssicherungsrunge sein) an unterschiedlichen Positionen lösbar befestigbar ist. Somit ist es möglich, die Anschlagmittel flexibel in vertikaler bzw. horizontaler Richtung des Nutzfahrzeugaufbaus gesehen an jegliche Fahrzeughöhe anpassbar zu positionieren und je nach Beladungssituation die Anschlagmittel optimal in der vertikalen bzw. horizontalen Richtung zu positionieren.

Die Ladungssicherungsrunge ist im oberen und unteren Bereich absolut lösbar an dem Nutzfahrzeugaufbau befestigt. Die Ladungssicherungsrunge kann einfach an dem Nutzfahrzeugaufbau befestigt und wieder vollständig gelöst und auf einfache Art und Weise entnommen werden. Das Befestigen und Lösen kann beispielsweise ein Einhaken und ein Aushaken des oberen und des unteren Befestigungselements der Ladungssicherungsrunge in Löcher bzw. Schlitze bzw. Öffnungen im Bereich des Daches und des Bodens des Nutzfahrzeugsaufbaus sein. Die Ladungssicherungsrunge ist somit ohne großen Aufwand und schnell an verschiedenen Positionen entlang des Laderaumbodens bzw. des Laderaumdaches des Nutzfahrzeugaufbaus positionierbar. Somit ist es möglich, die Ladungssicherungsrunge und damit die an der Ladungssicherungsrunge befestigten Anschlagmittel je nach Beladungssituation flexibel an verschiedenen Positionen des Nutzfahrzeugaufbaus unter Berücksichtigung der Höhe, Breite sowie Länge des Transportgutes anzubringen und jederzeit zu entfernen. Nach dem Anbringen des Ladungssicherungssytems können die Spanngurte bzw. Spannketten etc. jederzeit ohne übermäßen Aufwand bei teilweiser Beladung bzw. vollständiger Ausladung auf "Festsitz" überprüft werden. Eine Sicherstellung der ordnungsgemäßen Ladungssicherung kann zu jedem Zeitpunkt sowie bei jeglicher Beladungssituation gewährleistet werden. Durch das erfindungsgemäße Ladungssicherungssystem aus Ladungssicherungsrunge und Anschlagmittel wird somit ein hohes Maß an Flexibilität für die Positionierung der an der Ladungssicherungsrunge befestigten Anschlagmittel sowie der Ladung im Allgemeinen bereitgestellt. Zum einen sind die Anschlagmittel in vertikaler bzw. horizontaler Richtung an der Ladungssicherungsrunge an verschiedenen Positionen anbringbar. Zum anderen sind die Ladungssicherungsrungen (und somit auch die daran angebrachten Anschlagmittel) an verschiedenen Positionen des Nutzfahrzeugaufbaus anbringbar.

Die Ladungssicherungsrunge ist beispielsweise aus Eisen- oder Nichteisenmetallen hergestellt. Beispielsweise können die folgenden Materialien verwendet werden: Stahl: S235, S355, QStE 690, Strangguss, Aluminium-Strangguss, Aluminiumlegierung, Kupfer, Aluminium.

Die Materialstärke eines als Hohlprofil ausgebildeten oberen und/oder unteren Rungenteils beträgt beispielsweise 2 bis 5 mm. Die Materialstärke ergibt sich in Abhängigkeit des Einsatzzweckes. Beispielsweise beträgt die Materialstärke 3 mm.

Die Ladungssicherungsrunge ist vollständig und einfach abnehmbar (lösbar). Sie ist eine Alternative zu fest installierten Seiten-Schiebe-Rungen. Sie kann somit auch einfach nachgerüstet werden nebst individueller Anpassung an Ladeguthöhe, -breite, - länge bzw. Beladungszustand.

Das Ladungssicherungssystem ist hinsichtlich des zu sichernden Ladeguts individuell skalierbar, i.e. die Position der Anschlagmittel und die Position der Ladungssicherungsrunge kann in Abhängigkeit der Größe der Ladung (hoch, flach, breit etc.) flexibel angepasst werden. Auch die Anwendung in einem Doppelstocksystem ist möglich.

Das Ladungssicherungsrungensystem kann die vollumfängliche Ladungssicherung an Fahrzeugen ohne Seiten-Schiebe-Runge oder Mittelrunge oder sonstiger Runge übernehmen.

Das hohe Maß an Flexibilität hinsichtlich der Positionierung der Ladungssicherungsrungen bzw. der Anschlagmittel ermöglicht es, den Kraftfluss optimal auszulegen. Ein Gurthaltesystem (Spanngurte, Zurrgurte, Ketten etc.) kann mithilfe des neuartigen Ladungssicherungssystems optimal geführt werden und die Kraft somit im Bereich des Ladebodens wie z.B. in Bodenanschlagleisten und im Dachbereich wie z.B. in Dachanschlagleisten eingeleitet werden nebst Erfüllung der entsprechenden Normen.

Die Ladungssicherungsrunge weist ein oberes Rungenteil und ein unteres Rungenteil auf. Die Ladungssicherungsrunge ist teleskopierbar und kann daher für unterschiedliche Nutzfahrzeugaufbauten, die sich in ihrem Abstand zwischen dem Dach und dem Boden unterscheiden, verwendet werden. Beispielsweise ist wenigstens dasjenige Rungenteil als Hohlprofil ausgebildet ist, in dem das andere Rungenteil teleskopierbar geführt ist.

Der minimale Überlappungsbereich der beiden teleskopierbaren Rungenteile ist so gewählt, dass stets ein Überlappungsbereich von mindestens 100 mm vorhanden ist. Gemäß einer bevorzugten Ausführungsform ist der Überlappungsbereich der beiden teleskopierbaren Rungenteile so gewählt, dass ein Überlappungsbereich von mindestens 100 mm bis circa 3.600 mm zur Aufnahme der eintretenden Kräfte existiert.

Weiterhin stellt die Ladungssicherungsrunge ein separates bzw. autarkes Bauteil unabhängig von der Seitenplane sowie dem gesamten Nutzfahrzeugaufbau dar. Der Verwender kann die Anzahl der Ladungssicherungsrungen je Fahrzeugseite bzw. im Rahmen einer Ladungssicherungswand "über" den Ladeboden entsprechend des Transportgutes individuell festlegen (beispielsweise eine Ladungssicherungsrunge pro Fahrzeugseite oder zehn Ladungssicherungsrungen pro Fahrzeugseite; oder beispielsweise eine Ladungssicherungswand bestehend aus einer horizontalen oder zwei horizontalen Ladungssicherungsbalken etc.).

Gemäß einer beispielhaften Ausführungsform weist die Ladungssicherungsrunge wenigstens ein Federelement auf, welches die beiden Rungenteile in deren Längsrichtung voneinander wegdrückt bzw. zusammenzieht (Verspannung auf Druck oder auf Zug).

Bei dem Federelement kann es sich beispielsweise um ein mechanisches Federelement wie eine Spiralfeder handeln. Alternativ können auch hydraulische, pneumatische oder elektrische bzw. elektronische Federelemente bzw. Zylinder bzw. Aktuatoren bzw. Seile verwendet werden.

Das Federelement kann derart ausgebildet sein, dass es die beiden Rungenteile in deren Längsrichtung voneinander wegdrückt oder die beiden Rungenteile in deren Längsrichtung zusammenzieht.

Vorzugsweise ist das untere Rungenteil oder das obere Rungenteil als Hohlprofil ausgebildet und das Federelement innerhalb des Hohlfprofils angeordnet.

Beispielsweise ist das untere Rungenteil als Hohlprofil ausgebildet und das obere Rungenteil ist in dem Hohlprofil des unteren Rungenteils führbar gelagert oder umgekehrt. Das wenigstens eine Federelement ist dann beispielsweise an seinem unteren Endbereich an einem Anschlag innerhalb des Hohlprofils des unteren Rungenteils in Längsrichtung fixiert gehalten und an seinem oberen Endbereich an dem oberen Rungenteil, das in das Hohlprofil der unteren Rungenteils hineinragt in Längsrichtung fixiert gehalten. Die Fixierung kann allein durch die Druckkraft des Federelements gegen den Anschlag des unteren Rungenteils und gegen das obere Rungenteil erzielt werden. Das Federelement erzeugt somit eine Kraft, die das obere Rungenteil heraus aus dem unteren Rungenteil zu drücken versucht. Damit das obere und das untere Rungenteil durch die Druckkraft des Federelements nicht völlig voneinander getrennt werden, kann ein Blockierelement, das die Bewegung der beiden Rungenteile derart beschränkt, dass das obere und das untere Rungenteil nicht völlig voneinander getrennt werden können, vorgesehen sein. Das Blockierelement kann beispielsweise ein Bolzen innerhalb des unteren Rungenteils sein, gegen den das obere Rungenteil anstößt und somit in seiner Bewegung beschränkt ist.

Um die Führung der Spiralfeder zu verbessern, kann die Spiralfeder um eine Führungsstange herum angeordnet sein.

Mithilfe des Federelements wie zum Beispiel einer Spiralfeder (Zugfeder oder Druckfeder) ist ein Verspannen der Ladungssicherungsrunge gewährleistet. Die Federkraft drückt das obere Befestigungselement und das untere Befestigungselement der Ladungssicherungsrunge derart an den Nutzfahrzeugaufbau, dass die Ladungssicherungsrunge dadurch fixiert wird. Alternativ kann auch eine Zugfeder verwendet werden und die Ladungssicherungsrunge durch ein Zusammenziehen des oberen und unteren Rungeteils fixiert werden.

Das untere und/oder das obere Befestigungselement kann beispielsweise pilzförmig ausgebildet sein. Pilzförmig ist insbesondere so zu verstehen, dass das untere und/oder obere Befestigungselement ein in Bezug zur Längsrichtung der Ladungssicherungsrunge winkelig abstehendes Bolzenstück und ein an dem äußeren Bolzenstückende fest angebrachtes Tellerelement umfasst, das einen größeren Durchmesser aufweist als das Bolzenstück.

Die pilzförmigen Befestigungselemente sind durch Löcher im Bereich des Daches und des Bodens des Nutzfahrzeugaufbaus (wie z.B. Dachanschlagleistenlöcher oder Bodenanschlagleistenlöcher) so weit hindurchführbar, dass das Bolzenstück innerhalb des Loches angeordnet ist. Die Löcher im Bereich des Daches und des Bodens können beispielsweise kreisförmig, schlitzförmig oder eckig ausgebildet sein. Anschließend wird das Bolzenstück dann durch die Druckkraft des Federelements verspannt. Bei einer Ausführungsform mit einem Federelement, dass die beiden Rungenteile voneinander wegdrückt, wird das Bolzenstück des oberen Befestigungselements an die obere Seite des Lochs (Dachanschlagleistenlochs) gedrückt und das Bolzenstück des unteren Befestigungselements an die untere Seite des Lochs (Bodenanschlagleistenlochs) gedrückt. Das Tellerelement verhindert durch seinen größeren Durchmesser, dass das obere und das untere Befestigungselement im verspannten Zustand aus dem Loch herausgeführt werden kann.

Eine einfache Ausgestaltung des oberen Befestigungselements und/oder des unteren Befestigungselements ist beispielsweise eine Bundschraube oder eine Schlossschraube, die in Öffnungen innerhalb der Dachanschlagleiste bzw. der Bodenanschlagleiste einsteckbar ist. Alternativ kann auch eine Bundschraube oder Schlossschraube mit beidseitigem Kopf verwendet werden.

Die Verwendung von Schrauben mit beidseitigem Kopf erlaubt ebenfalls eine Fixierung der Ladungssicherungsrunge auf der Innenseite der Dachanschlagleiste sowie auf der Außenseite der Dachanschlagleiste sowie das Ladegut das gesamte Ladungsvolumen bis zum Dach einnimmt.

Gemäß einer alternativen Ausführungsform weist die Ladungssicherungsrunge wenigstens ein Federelement auf, welches die beiden Rungenteile in deren Längsrichtung nicht voneinander wegdrückt, sondern aufeinander zuzieht. Im Unterschied zu einer Ausführungsform, bei der das Federelement die beiden Rungenteile voneinander wegdrückt, wird bei dieser Ausführungsform das Bolzenstück des oberen Befestigungselements an die untere Seite des Dachanschlagleistenlochs gedrückt und das Bolzenstück des unteren Befestigungselements an die obere Seite des Bodenanschlagleistenlochs gedrückt.

Das obere und das untere Befestigungselement kann alternativ auch hakenförmig oder L-förmig ausgebildet sein. In beiden Fällen funktioniert die Verspannung der Ladungssicherungsrunge so wie für das pilzförmige Befestigungselement beschrieben. Die Löcher bzw. Öffnungen können rund, eckig etc. ausgestaltet sein (jegliche Öffnung zur Aufnahme von Anschlagmitteln).

Gemäß einer alternativen Ausführungsform weist das obere Rungenteil der Ladungssicherungsrunge eine derartige Kontur im Bereich der Dachanschlagleiste auf, dass sich im Gebrauchszustand der Ladungssicherungsrunge ein Formschluss zwischen dem oberen Rungenteil und der Dachanschlagleiste ergibt. Beispielsweise weist das obere Rungenteil einen Schlitz oder eine Vertiefung auf und weist die Dachanschlagleiste eine Erhöhung oder eine Nase auf. Der Schlitz und die Erhöhung sind so ausgebildet, dass sie formschlüssig ineinandergreifen, wenn die Ladungssicherungsrunge an der Dachanschlagleiste befestigt wird. Somit liegt im Gebrauchszustand (neben dem Kraftschluss) ein Formschluss zwischen dem oberen Rungenteil und der Dachanschlagleiste vor. Gemäß einer alternativen Ausführungsform weist zusätzlich oder alternativ das untere Rungenteil der Ladungssicherungsrunge mit der Bodenanschlagleiste eine derartige formschlüssige Verbindung auf.

Das obere Rungenteil und/oder das untere Rungenteil weist wenigstens eine Lochreihe mit mehreren Anschlaglöchern auf. Die wenigstens eine Lochreihe kann mehrere übereinander angeordnete schlüssellochförmige Anschlaglöcher umfassen.

Die Anschlaglöcher sind in vertikaler Richtung oder horizontaler Richtung (Ladungssicherungsrunge als Querbalken) verteilt angeordnet. Beispielsweise können die Anschlaglöcher in regelmäßigen Abständen von 30-200 mm, vorzugsweise 40 bis 70 mm, angeordnet sein. Die Schlüssellochform des Anschlaglochs weist eine Kreisform auf, an die sich eine Schlitzform (Rechteckform) anschließt. Der Durchmesser der Kreisform ist beispielsweise 11 bis 40 mm. Die Breite des Schlitzes ist beispielsweise 5 bis 20 mm. Die Höhe des Schlitzes ist beispielsweise 5 bis 18 mm.

In die Anschlaglöcher der Ladungssicherungsrungen sind erfindungsgemäße Anschlagmittel einhakbar bzw. einbringbar. Diese Anschlagmittel sind beispielsweise Lattentaschen oder Einhakösen. Die Anschlagmittel weisen wenigstens ein Einhängeelement, das zum lösbaren Ein- und Aushängen in ein Anschlagloch einer Ladungssicherungsrunge ausgebildet ist, auf.

Bei der Ausgestaltung des Anschlagmittels als Lattentasche weisen die Anschlagmittel ferner eine fest mit dem Einhängeelement verbundene Tasche, in die Latten einlegbar sind, auf.

Bei der Ausgestaltung des Anschlagmittels als Einhakösen weisen die Anschlagmittel ferner eine fest mit dem Einhängeelement verbundene Ringöse, in die Sicherungsmittel wie ein Spanngurt einschlaufbar sind, auf.

Gemäß einer beispielhaften Ausführungsform des Anschlagmittels sind wenigstens zwei Einhängeelemente derart im Abstand zueinander übereinander oder nebeneinander angeordnet, dass die Einhängeelemente in zwei benachbarte Anschlaglöcher der Ladungssicherungsrunge einführbar sind und durch Bewegen in Richtung nach unten zur Längsrichtung bzw. Querrichtung der Ladungssicherungsrunge verhaken. Anschlagmittel mit einem Einhängeelemente in Form eines Hakens ist ebenfalls realisierbar.

Beispielsweise kann das Einhängeelement pilzförmig ausgebildet sein, bestehend aus einem Bolzenstück oder Stiel und einem sich daran anschließenden Teller mit größerem Durchmesser. Bei einer Ausführungsform, bei der die Anschlaglöcher eine Schlüssellochform aufweisen, wird der Teller des Einhängeelements zunächst durch den kreisförmigen Bereich der Schlüssellochform so weit hindurchgeführt, dass das Bolzenstück oberhalb des Schlitzes der Schlüssellochform angeordnet ist. Anschließend wird das Bolzenstück dann nach unten innerhalb des Schlitzes der Schlüssellochform geführt. Der Teller weist einen größeren Durchmesser als die Breite des Schlitzes auf, so dass das Einhängeelement verhakt und nicht nach vorne aus dem Anschlagloch herausgeführt werden kann.

### Kurze Beschreibung der Zeichnungen

Fig. 1 zeigt eine erfindungsgemäße Ladungssicherungsrunge.
Fig. 2 zeigt den oberen Teil einer erfindungsgemäßen Ladungssicherungsrunge in perspektivischer Ansicht. Zur Veranschaulichung ist das untere Rungenteil zum Teil transparent dargestellt.
Fig. 3 zeigt ein Befestigungselement einer erfindungsgemäßen Ladungssicherungsrunge.
Fig. 4 zeigt eine Ladungssicherungsrunge, die an einem oberen Endbereich und an einem unteren Endbereich an einem Nutzfahrzeugaufbau lösbar befestigt ist. Für den Nutzfahrzeugaufbau sind vereinfachend nur ein Teil einer Dachanschlagleiste und ein Teil einer Bodenanschlagleiste gezeigt.
Fig. 5 zeigt den oberen Endbereich der in Fig. 4 gezeigten Ladungssicherungsrunge und die Dachanschlagleiste des Nutzfahrzeugaufbaus, wobei die Dachanschlagleiste in Schnittdarstellung gezeigt ist.
Fig. 6 zeigt den unteren Endbereich der in Fig. 4 gezeigten Ladungssicherungsrunge und die Bodenanschlagleiste des Nutzfahrzeugaufbaus.
Fig. 7 zeigt ein erfindungsgemäßes Anschlagmittel, das an einer Ladungssicherungsrunge angebracht ist. Die Ladungssicherungsrunge ist zur besseren Veranschaulichung in Schnittdarstellung gezeigt.
Fig. 8 zeigt einen Ausschnitt eines erfindungsgemäßen Ladungssicherungssystems bestehend aus Ladungssicherungsrunge und Anschlagmittel. Ferner zeigt Fig. 8 einen Spanngurt, der mit dem Anschlagmittel des Ladungssicherungssystems verbunden ist.
Fig. 9 ist eine schematische Darstellung eines Abschnitts eines unteren Rungenteils 25 und eines an dem unteren Rungenteil angebrachten Anschlagmittels 5.
Fig. 10 zeigt einen Teil eines Nutzfahrzeugs mit einem Nutzfahrzeugaufbau und einer beispielhaften Ausführungsform eines erfindungsgemäßen Ladungssicherungssystems.
Fig. 11 ist eine schematische Ansicht von beispielhaften Ausführungsformen für das untere Befestigungselement in Schnittansicht.
Fig. 12 zeigt die Hecktür einer beispielhaften Ausführungsform eines erfindungsgemäßen Nutzfahrzeugs.

### Detaillierte Beschreibung

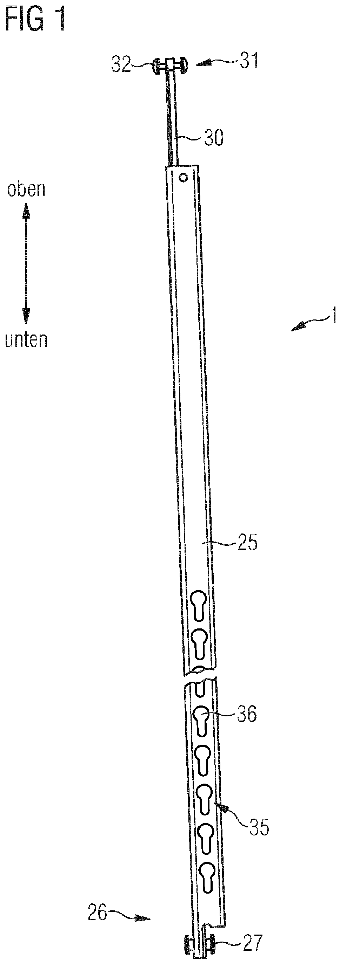

Fig. 1 zeigt eine erfindungsgemäße Ladungssicherungsrunge.

Die Ladungssicherungsrunge 1 ist in vertikaler Richtung, d.h. in der oben-unten Richtung, ausgerichtet. Diese Ausrichtung entspricht einer möglichen Ausrichtung der Ladungssicherungsrunge im eingebauten Zustand (Gebrauchszustand). In dieser Figur werden die Bereiche (oberer Bereich, unterer Bereich, etc.) der Ladungssicherungsrunge 1 bezogen auf diese vertikale Ausrichtung der Ladungssicherungsrunge 1 angegeben.

Die Ladungssicherungsrunge 1 weist ein unteres Rungenteil 25 und ein oberes Rungenteil 30 auf. Das obere Rungenteil 30 ist in dem unteren Rungenteil 25 teleskopierbar geführt. Das untere Rungenteil 25 weist auf der in der Fig. 1 nach vorne zeigenden Seite eine Lochreihe 35 auf. Auch auf der in der Fig. 1 nach rechts zeigenden Seite und auf der in Fig. 1 nach hinten zeigenden Seite ist jeweils eine Lochreihe 35 vorhanden (in Fig. 1 nicht sichtbar). Die Lochreihen 35 weisen jeweils mehrere Anschlaglöcher 36 auf, die vertikal übereinander angeordnet sind. In der Fig. 1 ist das untere Rungenteil 25 in einer unterbrochenen Ansicht dargestellt, so dass in der Fig. 1 nur einige der Anschlaglöcher 36 der Lochreihe 35 gezeigt sind. Die Anschlaglöcher 36 weisen zum Beispiel eine Schlüssellochform auf, diese können aber auch rechteckförmig, rund, oval oder jede andere geeignete Randform aufweisen. Das obere Rungenteil 30 weist an einem oberen Endbereich 31 zwei obere Befestigungselemente 32 auf. Das untere Rungenteil 25 weist an einem unteren Endbereich 26 zwei untere Befestigungselemente 27 auf.

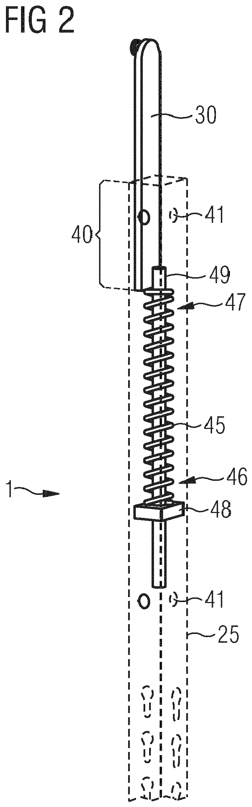

Fig. 2 zeigt eine Teilansicht einer erfindungsgemäßen Ladungssicherungsrunge 1 in perspektivischer Ansicht. Die Teilansicht zeigt einen Bereich einer Ladungssicherungsrunge 1. Der gezeigte Bereich umfasst das obere Rungenteil 30 und einen Teil des unteren Rungenteils 25. Das untere Rungenteil 25 ist als Hohlprofil ausgebildet. Das Hohlprofil des unteren Rungenteils 25 ist zur Veranschaulichung transparent dargestellt. Das obere Rungenteil 30 ist in dem unteren Rungenteil 25 teleskopierbar geführt. Das obere Rungenteil 30 weist einen Überlappungsbereich 40 mit dem unteren Rungenteil 25 auf. Der Überlappungsbereich ist der Bereich, in dem das obere Rungenteil 30 innerhalb des unteren Rungenteils 25 liegt. Eine Druckfeder 45 drückt das obere Rungenteil 30 und das untere Rungenteil 25 in deren Längsrichtung voneinander weg. Die Verbindung zwischen der Druckfeder und den Rungenteilen 25, 30 ist derart ausgebildet, dass das obere Rungenteil 30 an einem unteren Endbereich mit einer Führungsstange 49 verbunden ist. Die Führungsstange 49 erstreckt sich nach unten innerhalb des unteren Rungenteils 25. Innerhalb des unteren Rungenteils 25 ist ein Halteelement 48 angebracht. Dieses Halteelement 48 ist fest mit dem Hohlprofil 25 verbunden und hat ein Durchgangsloch, durch welches die Führungsstange 49 hindurchführbar ist. Die Druckfeder 45 ist als Spiralfeder ausgebildet. Innerhalb der Druckfeder 45 verläuft die Führungsstange 49. Die Druckfeder 45 stützt sich an ihrem unteren Endbereich 46 an der oberen Seite des Halteelements 48 ab. Die Druckfeder 45 stützt sich an ihrem oberen Endbereich 47 an der unteren Seite des oberen Rungenteils 30 ab. Damit das obere Rungenteil durch die Druckkraft der Druckfeder nicht komplett aus dem unteren Rungenteil herausgedrückt wird, weist das untere Rungenteil ein Durchgangsloch 41 auf. Durch dieses Durchgangsloch kann beispielsweise ein Bolzen geführt werden. Dieser Bolzen bildet eine obere Barriere, über die hinaus die Führungsstange durch die Druckfeder 45 nicht nach oben gedrückt werden kann. Ferner weist das untere Rungenteil ein zweites Durchgangsloch 41 unterhalb der Führungsstange auf, durch welches beispielsweise ein Bolzen führbar ist. Das zweite Durchgangsloch kann mit einen darin eingesteckten Bolzen eine untere Barriere bilden.

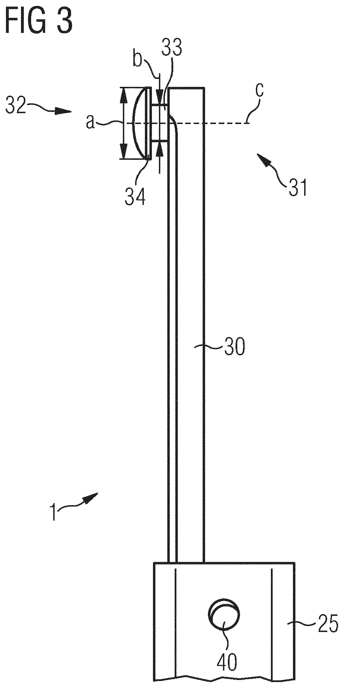

Fig. 3 zeigt ein Befestigungselement einer erfindungsgemäßen Ladungssicherungsrunge 1. Die Teilansicht zeigt einen oberen Abschnitt der Ladungssicherungsrunge 1. Das obere Rungenteil 30 weist an seinem oberen Endbereich 31 ein Befestigungselement 32 auf. Das obere Befestigungselement 32 weist ein in Bezug zur Längsrichtung der Ladungssicherungsrunge 1 winklig abstehendes Bolzenstück 33 und ein an dem äußeren Bolzenstückende (in der Figur das linke Ende) fest angebrachtes Tellerelement 34 auf. Das Befestigungselement 32, bestehend aus Bolzenstück 33 und Tellerelement 34, ist rotationssymmetrisch ausgebildet. Der Durchmesser a des Tellerelements 34 ist größer als der Durchmesser b des Bolzenstücks 33. Das Befestigungselement weist die Rotationsachse c auf. Das untere Rungenteil 25 weist ein Durchgangsloch 41 am oberen Ende auf. Durch das Durchgangsloch 41 ist ein Element wie ein Bolzen hindurchführbar.

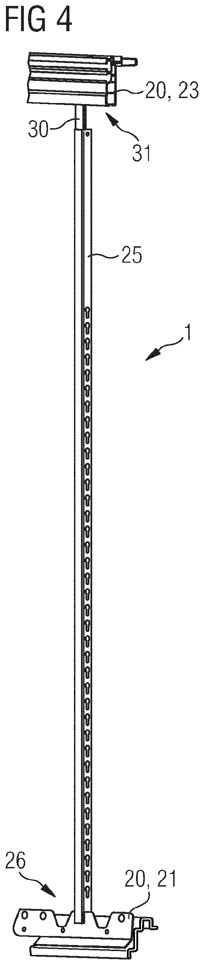

Fig. 4 zeigt eine Ladungssicherungsrunge 1, die an einem oberen Endbereich 31 und an einem unteren Endbereich 26 mit einem Nutzfahrzeugaufbau 20 lösbar befestigt ist, in einer perspektivischen Ansicht. Für den Nutzfahrzeugaufbau ist vereinfachend nur ein Teil einer Dachanschlagleiste 23, an der das obere Rungenteil 30 lösbar befestigt ist, und ein Teil einer Bodenanschlagleiste 21, an der das untere Rungenteil 25 lösbar befestigt ist, gezeigt.

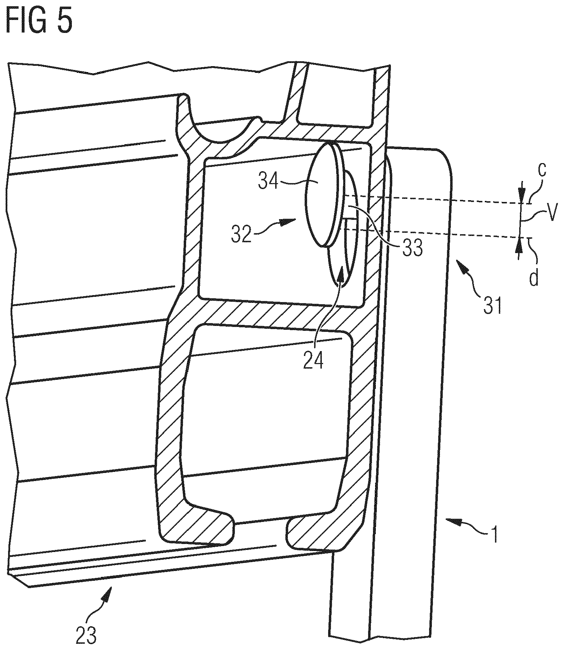

Fig. 5 zeigt den oberen Endbereich 31 der in Fig. 4 gezeigten Ladungssicherungsrunge 1 und die in Fig. 4 dargestellte Dachanschlagleiste 23 des Nutzfahrzeugaufbaus 20, mit dem der obere Endbereich 31 lösbar verbunden ist. Die Dachanschlagleiste 23 ist in Fig. 5 im Schnitt dargestellt. Der Schnitt verläuft in vertikaler Richtung und etwa in dem Bereich, in dem die Ladungssicherungsrunge 1 mit der Dachanschlagleiste 23 lösbar verbunden ist. Die Dachanschlagleiste 23 weist ein Dachanschlagleistenloch 24 auf. Das Dachanschlagleistenloch 24 ist kreisförmig ausgebildet und weist die Rotationsachse d auf. In anderen Ausführungsformen kann das Dachanschlagleistenloch auch zum Beispiel schlitzförmig oder eckig ausgebildet sein. Durch das Dachanschlagleistenloch 24 ragt das obere Befestigungselement 32 der Ladungssicherungsrunge 1 hindurch. Das obere Befestigungselement ist rotationssymmetrisch ausgebildet und weist die Rotationsachse c auf. Das obere Befestigungselement 32 ist in Form eines Pilzes ausgebildet. Das obere Befestigungselement 32 ist in dem in Fig. 5 gezeigten Zustand nicht konzentrisch zu dem Dachanschlagleistenloch 24 angeordnet, sondern ist nach oben versetzt angeordnet. Der obere Endbereich 31 der Ladungssicherungsrunge 1 wird durch das Federelement 45 (in der Fig. 5 nicht gezeigt) soweit nach oben gedrückt bis das Bolzenstück 33, das mindestens bereichsweise innerhalb des Dachanschlagleistenlochs 24 angeordnet ist, an den oberen Rand des Dachanschlagleistenlochs 24 stößt. Somit sind die Rotationsachsen d und c versetzt zueinander angeordnet. Durch den Versatz V von der Rotationsachse d des Dachanschlagleistenlochs 24 und der Rotationsachse c des oberen Befestigungselements 32 erstreckt sich das Tellerelement 34 des oberen Befestigungselements 32 über den oberen Rand des Dachanschlagleistenlochs 24 hinaus. Durch den Überstand des Tellerelements 34 nach oben in vertikaler Richtung bezogen auf das Dachanschlagleistenloch 24 ist eine Bewegung der Ladungssicherungsrunge 1 in horizontaler Richtung gesperrt.

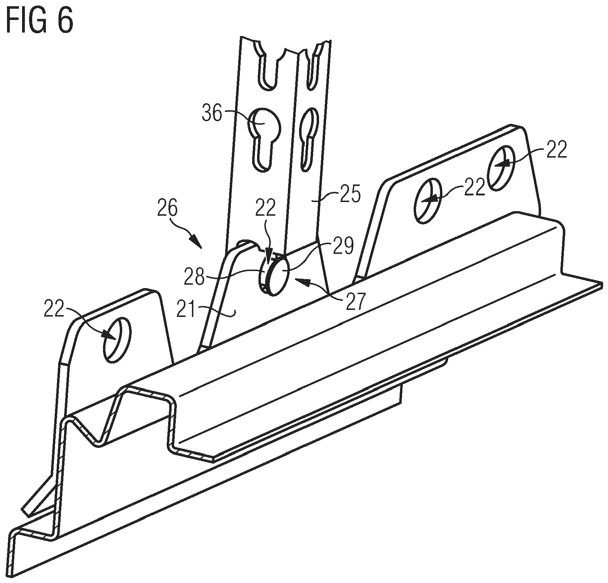

Fig. 6 zeigt den unteren Endbereich 26 der in Fig. 4 gezeigten Ladungssicherungsrunge 1 und den in Fig. 4 dargestellten Bereich der Bodenanschlagleiste 21 des Nutzfahrzeugaufbaus 20, mit dem der untere Endbereich 26 lösbar verbunden ist, in einer perspektivischen Ansicht. Die Bodenanschlagleiste 21 weist Bodenanschlagleistenlöcher 22 auf. Das untere Rungenteil 25 weist in seinem unteren Endbereich 26 ein Befestigungselement 27 auf. Das Befestigungselement 27 weist ein in Bezug zur Längsrichtung der Ladungssicherungsrunge 1 winklig abstehendes Bolzenstück 28 und ein an dem äußeren Bolzenstückende fest angebrachtes Tellerelement 29 auf. Das untere Befestigungselement ist rotationssymmetrisch ausgebildet. Das untere Befestigungselement 27 ist in Form eines Pilzes ausgebildet. Die Bodenanschlagleistenlöcher 22 sind kreisförmig ausgebildet. In anderen Ausführungsformen kann das Bodenanschlagleistenloch auch zum Beispiel schlitzförmig oder eckig ausgebildet sein. Durch eines der Bodenanschlagleistenlöcher 22 ragt das untere Befestigungselement 27 der Ladungssicherungsrunge 1 hindurch. Das untere Befestigungselement 27 ist in dem in Fig. 6 gezeigten Zustand nicht konzentrisch zu dem Bodenanschlagleistenloch 22 angeordnet, sondern ist nach unten versetzt angeordnet. Der untere Endbereich 26 der Ladungssicherungsrunge 1 wird durch das Federelement 45 (in der Fig. 6 nicht gezeigt) soweit nach unten gedrückt bis das Bolzenstück 28, das mindestens bereichsweise innerhalb des Bodenanschlagleistenlochs 22 angeordnet ist, an den unteren Rand des Bodenanschlagleistenlochs 22 stößt.

Wie bereits in der Fig. 5 für die Befestigung von der Ladungssicherungsrunge 1 mit der Dachanschlagleiste 23 beschrieben, kommt es somit auch bei der Befestigung von der Ladungssicherungsrunge 1 mit der Bodenanschlagleiste 21 zu einem Versatz der Rotationsachsen des Bodenanschlagleistenlochs 22 und des unteren Befestigungselements 27 in vertikaler Richtung. Das Tellerelement 29 des unteren Befestigungselements 27 erstreckt sich über den unteren Rand des Bodenanschlagleistenlochs 22 hinaus. Durch den Überstand des Tellerelements 29 nach unten in vertikaler Richtung bezogen auf das Bodenanschlagleistenloch 22 ist eine Bewegung der Ladungssicherungsrunge 1 in horizontaler Richtung gesperrt.

Das untere Rungenteil 25 der Ladungssicherungsrunge weist eine derartige Kontur im Bereich der Bodenanschlagleiste auf, dass sich ein Formschluss zwischen dem unteren Rungenteil 25 und der Bodenanschlagleiste 21 ergibt. In der Figur ist zu erkennen, dass die Bodenanschlagleiste 21 in eine Aussparung an der Unterseite des unteren Rungenteils 25 hineinragt.

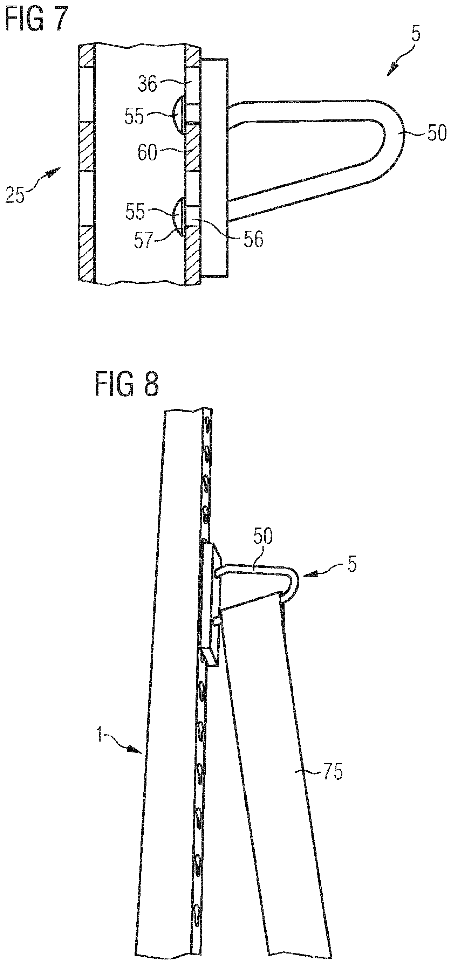

Fig. 7 zeigt ein erfindungsgemäßes Anschlagmittel 5, das an dem unteren Rungenteil 25 einer Ladungssicherungsrunge 1 angebracht ist. Das untere Rungenteil 25 ist in Schnittdarstellung gezeigt. Das Anschlagmittel 5 weist eine Ringöse 50 und zwei mit der Ringöse 50 fest verbundene Einhängeelemente 55 auf. Die Einhängeelemente 55 sind jeweils pilzförmig ausgebildet. Die Einhängeelemente 55 weisen jeweils ein von der Ringöse 50 sich wegerstreckendes Bolzenstück 56 auf. An dem äußeren Ende des Bolzenstücks 56 (linkes Ende des Bolzenstücks 56 in der Fig. 7) ist ein Tellerelement 57 angebracht. Der Durchmesser des Tellerelements 57 ist größer als der Durchmesser des Bolzenstücks 56.

In dem in der Fig. 7 gezeigten Zustand, bei dem das Anschlagmittel 5 an der Ladungssicherungsrunge angebracht ist, ragen die Einhängeelemente 55 durch die Anschlaglöcher 36 des unteren Rungenteils 25 der Ladungssicherungsrunge hindurch. Die Einhängeelemente 55 sind jeweils in dem unteren Bereich der Anschlaglöcher 36 angeordnet. Die Tellerelemente 57 ragen jeweils in vertikaler Richtung nach unten über das untere Ende des Anschlaglochs 36 hinaus.

Fig. 8 zeigt einen Ausschnitt eines erfindungsgemäßen Ladungssicherungssystems 60. Der Ausschnitt des Ladungssicherungssystems weist eine Ladungssicherungsrunge 1 und ein mit der Ladungssicherungsrunge 1 lösbar befestigtes Anschlagmittel 5 auf. Ferner ist ein Spanngurt 75 an der Ringöse 50 des Anschlagmittels 5 angebracht.

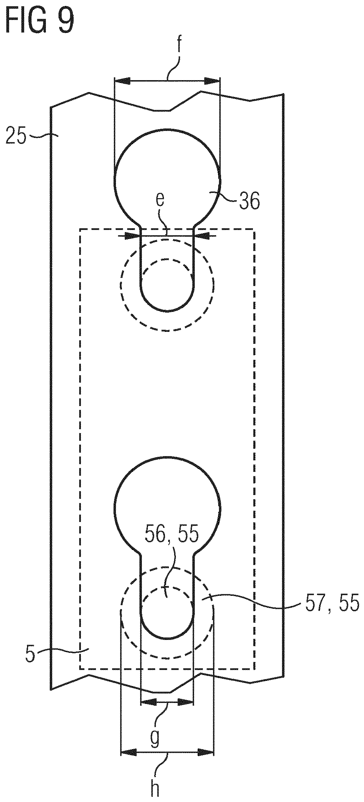

Fig. 9 zeigt einen Abschnitt eines unteren Rungenteils 25 und ein Anschlagmittel 5 in vereinfachter schematischer Darstellung.

In dem gezeigten Abschnitt des unteren Rungenteils 25 befinden sich zwei Anschlaglöcher 36. Die Anschlaglöcher 36 haben eine Schlüssellochform, d.h. sie weisen einen kreisförmigen oberen Bereich und einen sich daran anschließenden unteren rechteckförmigen oder schlitzförmigen Bereich auf. Die Breite e des schlitz- oder rechteckförmigen Bereichs ist kleiner als der Durchmesser f des kreisförmigen Bereichs.

In gestrichelter Linie ist schematisch und vereinfacht ein Anschlagmittel 5, welches in die zwei Anschlaglöcher 36 eingehängt ist, in gestrichelter Linie dargestellt. Die zwei Einhängeelemente 55 des Anschlagmittels 5 ragen dabei durch die Anschlaglöcher 36 hindurch. Die Bolzenstücke 56 der Einhängeelemente 55 sind dabei in dem unteren schlitz- oder rechteckförmigen Bereich des schlüssellochförmigen Anschlaglochs 36 angeordnet.

Der Durchmesser h des Tellerelements 57, das an dem äußeren Ende des Bolzenstücks 56 angebracht ist, ist größer als die Breite e des schlitz- oder rechteckförmigen Bereichs des Anschlaglochs 36, so dass eine Bewegung des Anschlagmittels 5 in der Blickrichtung von Fig. 9 (Richtung senkrecht zur Blattebene) heraus aus dem Anschlagloch 36 verhindert wird.

Der Durchmesser h des Tellerelements 57 ist ferner kleiner als der Durchmesser f des kreisförmigen Bereichs des Anschlaglochs 36, so dass die Einhängeelemente 55 in die Anschlaglöcher 36 in dem kreisförmigen Bereich einführbar sind und dann nach unten geschoben werden oder via Schwerkraft / Gravitation nach unten fallen.

Der Durchmesser g des Bolzenstücks 56 des Einhängeelements 55 entspricht ungefähr der Breite e des schlitz- oder rechteckförmigen Bereichs des Anschlaglochs 36, so dass das Einhängeelement 5 in dem schlitz- oder rechteckförmigen Bereich des Anschlaglochs 36 nach oben und nach unten verschiebbar ist.

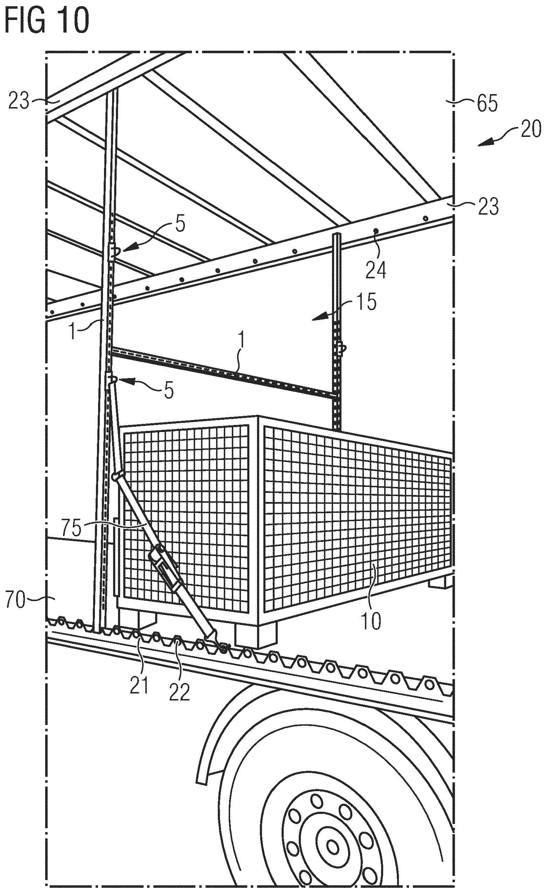

Fig. 10 zeigt einen Teil eines Nutzfahrzeugs mit einem Nutzfahrzeugaufbau 20 und einer beispielhaften Ausführungsform eines erfindungsgemäßen Ladungssicherungssystems.

Das Nutzfahrzeug hat einen Ladeboden 70, an dessen Längsseiten jeweils eine Bodenanschlagleiste 21 mit Bodenanschlagleistenlöchern 22 angeordnet ist. Das Nutzfahrzeug hat ein Dach 65, an dessen Längsseiten jeweils eine Dachanschlagleiste 23 mit Dachanschlagleistenlöchern 24 angeordnet ist. In dem Laderaum 15 des Nutzfahrzeugaufbaus 20 ist eine Ladung 10 aufgenommen. Auf beiden Seiten des Laderaums ist jeweils eine erfindungsgemäße Ladungssicherungsrunge 1 (in vertikaler Ausrichtung) mit der Dachanschlagleiste bzw. der Bodenanschlagleiste befestigt. Außerdem ist eine weitere erfindungsgemäße Ladungssicherungsrunge 1 (in horizontaler Ausrichtung) zwischen den beiden vertikalen Ladungssicherungsrungen angeordnet. Die Ladung 10 ist mit Hilfe eines Spanngurts 75 gesichert. Der Spanngurt 75 ist unter anderem an einem Anschlagmittel 5 befestigt. Das Anschlagmittel 5 ist an einer der Ladungssicherungsrungen 1 befestigt.

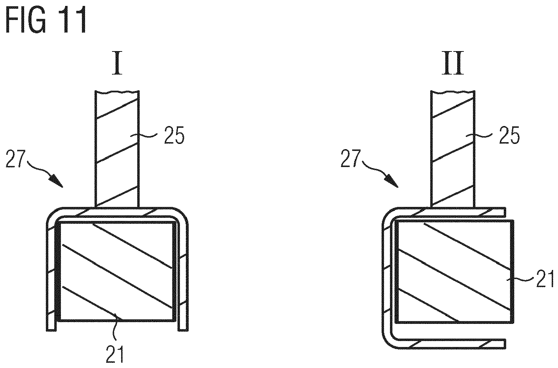

Fig. 11 ist eine vereinfachte schematische Ansicht von beispielhaften Ausführungsformen für das untere Befestigungselement in Schnittansicht.

Die Fig. 11 I zeigt ein unteres Rungenteil 25 der Ladungssicherungsrunge. Das untere Rungenteil 25 weist das untere Befestigungselement 27 auf. Das untere Befestigungselement 27 ist als ein nach unten geöffnetes U-Profil ausgebildet. Das U-Profil ist von oben auf eine Bodenanschlagleiste 21 aufgesetzt. Das U-Profil wird beispielsweise durch eine in der Fig. 11 nicht gezeigten Druckfeder auf die Bodenanschlagleiste 21 gedrückt (kraftschlüssige Verbindung).

Die Fig. 11 II zeigt ein unteres Rungenteil 25 der Ladungssicherungsrunge. Das untere Rungenteil 25 weist das untere Befestigungselement 27 auf. Das untere Befestigungselement 27 ist als ein nach rechts geöffnetes U-Profil ausgebildet. Das U-Profil ist seitlich auf eine Bodenanschlagleiste 21 aufgesetzt. Das U-Profil wird beispielsweise durch eine in der Fig. 11 nicht gezeigten Druckfeder auf die Bodenanschlagleiste 21 gedrückt (kraftschlüssige Verbindung). Das in der Fig. 11 I und II gezeigte U-Profil und die Bodenanschlagleiste können so ausgebildet sein, dass das U-Profil auf der Bodenanschlagleiste 21 in horizontaler Richtung (wie ein Schlitten) verschiebbar ist. Ferner kann das U-Profil zum Beispiel über eine in der Fig. 11 nicht gezeigte Druckfeder auf die Bodenanschlagleiste 21 gedrückt werden, so dass eine kraftschlüssige Verbindung zwischen der Bodenanschlagleiste und dem U-Profil entsteht. Durch leichtes Verschieben des U-Profils in vertikale Richtung nach oben (entgegen der Kraft der Druckfeder) kann die kraftschlüssige Verbindung gelöst und das U-Profil auf der Bodenanschlagleiste in horizontaler Richtung verschoben werden. Bekannte Einrichtungen (wie z.B. Fixierschrauben) können zusätzlich zum Fixieren des U-Profils an der Bodenanschlagleiste verwendet werden.

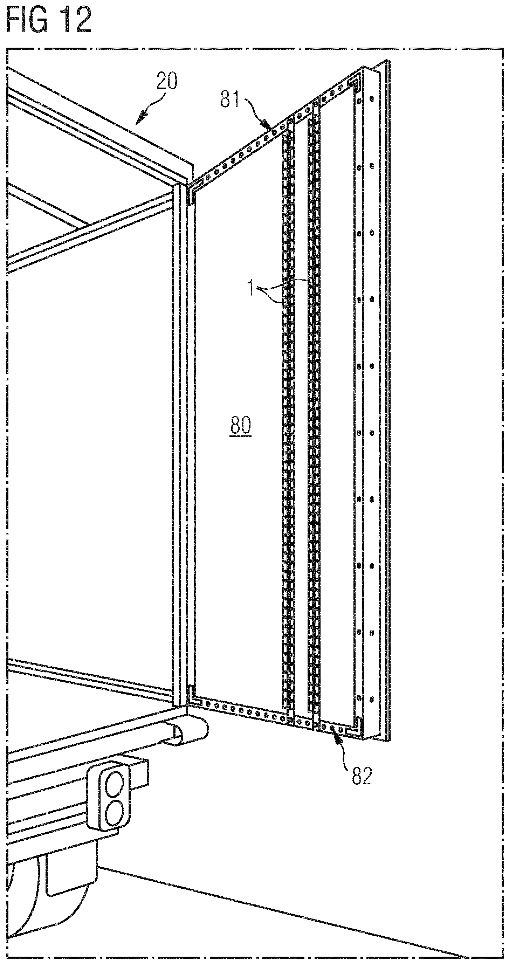

Fig. 12 zeigt die Hecktür 80 einer beispielhaften Ausführungsform eines Nutzfahrzeugaufbaus 20. Die Hecktür 80 weist an ihrer Innenseite eine obere Lochreihe 81 und eine untere Lochreihe 82 auf. Die obere Lochreihe 81 und die untere Lochreihe 82 weisen jeweils mehrere in horizontaler Richtung gleichmäßig verteilte Öffnungen (Löcher) auf. Zwei Ladungssicherungsrungen 1 sind jeweils mit dem oberen Befestigungselement an einem Loch der oberen Lochreihe 81 und jeweils mit dem unteren Befestigungselement an einem Loch der unteren Lochreihe 82 befestigt.

### Gewerbliche Anwendbarkeit

Die erfindungsgemäße Ladungssicherungsrunge kann schnell und ohne Aufwand an verschiedenen Stellen des Nutzfahrzeugaufbaus bei Teilbeladung oder voller Ausladung oder einseitiger Beladung jederzeit individuell angebracht werden. Die Ladungssicherungsrunge kann in vertikaler Ausrichtung oder in horizontaler Ausrichtung angebracht werden. Beispielsweise kann die Ladungssicherungsrunge an einer Dachanschlagleiste und an einer Bodenanschlagleiste eines Nutzfahrzeugaufbaus angebracht werden. Die Ladungssicherungsrunge weist wenigstens eine Lochreihe mit mehreren Anschlaglöchern auf, in die ein oder mehrere Anschlagmittel wie z.B. Lattentaschen, Einhakösen oder dergleichen lösbar befestigbar sind. Durch diese Flexibilität des Anbringens der Ladungssicherungsrunge und der Anschlagmittel wird eine optimale Positionierung des Anschlagmittels ermöglicht. Ein Gurthaltesystem (Spanngurte, Zurrgurte etc.) kann an den Anschlagmitteln angebracht werden. Die optimale Positionierung erlaubt einen optimalen Kraftfluss in dem Gurthaltesystem und einen sichere Verspannung der Ladung im Ladungsraum des Nutzfahrzeugs.

Ferner lassen sich die erfindungsgemäßen Ladungssicherungsrungen aufgrund ihrer einfachen Befestigungsmöglichkeit wie beispielsweise an Löchern einer Dachanschlagleiste oder einer Bodenanschlagleiste auch als Nachrüstteil verwenden.

Mit Hilfe der Fig. 10 wird die Verwendung der Ladungssicherungsrunge sowie des Anschlagmittels erklärt. Die Ladungssicherungsrunge 1 wird oben an der Dachanschlagleiste 23 angebracht, indem das obere Befestigungselement der Ladungssicherungsrunge durch ein Dachanschlagleistenloch 24 hindurchgeführt wird. Anschließend wird die Ladungssicherungsrunge 1 unten an Bodenanschlagleiste 21 angebracht, indem das untere Befestigungselement der Ladungssicherungsrunge durch ein Bodenanschlagleistenloch hindurchgeführt wird. Damit das untere Befestigungselement durch das Bodenanschlagleistenloch 22 geführt werden kann, muss die Ladungssicherungsrunge 1 gegen die Federkraft des Federelements (bei einer Druckfeder) zusammengedrückt bzw. gegen die Federkraft des Federelements (bei einer Zugfeder) auseinandergezogen werden. Sobald die Ladungssicherungsrunge 1 oben und unten am Nutzfahrzeugbau 20 angebracht ist, drückt die Federkraft des Federelements das oberer Befestigungselement an den oberen Rand bzw. den unteren Rand des Dachanschlagleistenlochs 24 und das untere Befestigungselement an den unteren Rand bzw. den oberen Rand des Bodenanschlagleistenlochs 22. Somit wird die Ladungssicherungsrunge 1 verspannt. Die pilzförmige Ausgestaltung des oberen Befestigungselements und des unteren Befestigungselements verhindert eine horizontale Bewegung der Ladungssicherungsrunge.

Alternativ kann die Ladungssicherungsrunge 1 natürlich erst unten und dann oben angebracht werden. Die Ladungssicherungsrunge kann auch in horizontaler Ausrichtung angebracht werden, beispielsweise zwischen zwei Ladungssicherungsrungen, die in vertikaler Ausrichtung an dem Nutzfahrzeugaufbau angebracht sind.

Ein oder mehrere Anschlagmittel 5 können vor oder nach dem Anbringen der Ladungssicherungsrunge 1 an der Ladungssicherungsrunge 1 angebracht werden. Dabei werden die Einhängeelemente des einen oder der mehreren Anschlagmittel 5 in zwei übereinanderliegende Anschlaglöcher einer Lochreihe der Ladungssicherungsrunge 1 eingehakt.

Ein Spanngurt 75 kann dann an diesem einen oder den mehreren Anschlagmitteln 5 angebracht werden. Die Ladung 10 kann durch die Spanngurte 75 u.a. bei geöffneter Seitenplane sicher verspannt werden.

Die hier verwendeten Begriffe "ungefähr", "etwa", "circa", "im Wesentlichen" oder "im Allgemeinen", die in Zusammenhang mit einem messbaren Wert wie beispielsweise einem Parameter, einer Menge, einer Form, einer zeitlichen Dauer oder dergleichen verwendet werden, schließen Abweichungen oder Schwankungen von ± 10% oder weniger, vorzugsweise ± 5% oder weniger, weiter vorzugsweise ± 1% oder weniger und weiter vorzugsweise ± 0,1% des jeweiligen Wertes oder von dem jeweiligen Wert mit ein, sofern diese Abweichungen bei der Umsetzung der offenbarten Erfindung in die Praxis noch technisch sinnvoll sind. Es wird ausdrücklich darauf hingewiesen, dass der Wert, auf den sich der Begriff "ungefähr" bezieht, als solcher ausdrücklich und im Besonderen offenbart ist. Die Angabe von Bereichen durch Anfangs- und Endwerte umfasst all diejenigen Werte und Bruchteile dieser Werte, die von dem jeweiligen Bereich eingeschlossen sind, wie auch dessen Anfangs- und Endwerte.

Es wird explizit erklärt, dass alle Merkmale, die in der Beschreibung und/oder den Ansprüchen offenbart sind, dazu bestimmt sind, separat und unabhängig voneinander sowohl für den Zweck der ursprünglichen Offenbarung als auch für den Zweck der Beschränkung der beanspruchten Erfindung unabhängig von der Zusammenstellung der Merkmale in den Ausführungsformen und/oder den Ansprüchen offenbart zu werden. Es wird explizit erklärt, dass alle Wertebereiche oder Angaben von Gruppen von Objekten jeden möglichen Zwischenwert oder jedes mögliche dazwischen liegende Objekt sowohl für den Zweck der ursprünglichen Offenbarung als auch für den Zweck der Beschränkung der beanspruchten Erfindung, insbesondere zur Bestimmung der Grenzen von Wertebereichen offenbaren.

### Bezugszeichenliste

- 1: Ladungssicherungsrunge
- 5: Anschlagmittel
- 10: Ladung
- 15: Laderaum
- 20: Nutzfahrzeugaufbau
- 21: Bodenanschlagleiste
- 22: Bodenanschlagleistenloch
- 23: Dachanschlagleiste
- 24: Dachanschlagleistenloch
- 25: unteres Rungenteil
- 26: unterer Endbereich des unteren Rungenteils
- 27: unteres Befestigungselement
- 28: Bolzenstück des unteren Befestigungselements
- 29: Tellerelement des unteren Befestigungselements
- 30: oberes Rungenteil
- 31: oberer Endbereich des oberen Rungenteils
- 32: oberes Befestigungselement
- 33: Bolzenstück des oberen Befestigungselements
- 34: Tellerelement des oberen Befestigungselements
- 35: Lochreihe
- 36: Anschlagloch
- 40: Überlappungsbereich
- 41: Durchgangsloch
- 45: Federelement
- 46: unterer Endbereich des Federelements
- 47: oberer Endbereich des Federelements
- 49: Führungsstange
- 50: Ringöse
- 55: Einhängeelement
- 56: Bolzenstück des Einhängeelements
- 57: Tellerelement des Einhängeelements
- 60: Ladungssicherungssystem
- 65: Dach
- 70: Ladeboden
- 75: Spanngurt
- 80: Hecktür
- 81: obere Lochreihe
- 82: untere Lochreihe

- a: Durchmesser des Tellerelements des oberen Befestigungselements
- b: Durchmesser des Bolzenstücks des oberen Befestigungselements
- c: Rotationsachse des oberen Befestigungselements
- d: Rotationsachse des Dachanschlagleistenlochs
- e: Breite des schlitzförmigen Bereichs des Anschlaglochs
- f: Durchmesser des kreisförmigen Bereichs des Anschlaglochs
- g: Durchmesser des Bolzenstücks des Einhängeelements
- h: Durchmesser des Tellerelements des Einhängeelements
- V: Versatz

## Patentansprüche

1. Teleskopierbare Ladungssicherungsrunge (1), die in allen Teleskopstellungen einer Mindestquerlast von 450 daN bis 10.000 daN, insbesondere von 800 daN bis 2.500 daN standhält und dadurch eine flexible Fixiermöglichkeit für ein Anschlagmittel (5) zur Sicherung von Ladung (10) in einem Laderaum (15) eines Nutzfahrzeugaufbaus (20) eines Nutzfahrzeugs schafft, mit:
- einem unteren Rungenteil (25), das an einem unteren Endbereich (26) ein unteres Befestigungselement (27) zum lösbaren Befestigen im Bereich des Ladebodens (70) des Nutzfahrzeugaufbaus (20) aufweist,
- einem oberen Rungenteil (30), das an einem oberen Endbereich (31) ein oberes Befestigungselement (32) zum lösbaren Befestigen im Bereich des Dachs (65) des Nutzfahrzeugaufbaus (20) aufweist,
wobei
- das untere Rungenteil (25) und das obere Rungenteil (30), zueinander teleskopierbar angeordnet sind, und
- das obere Rungenteil (30) und/oder das untere Rungenteil (25) wenigstens eine Lochreihe (35) mit mehreren Anschlaglöchern (36) aufweist, in die ein oder mehrere Anschlagmittel (5) wie z.B. Lattentaschen, Einhakösen oder dergleichen lösbar befestigbar sind.

2. Ladungssicherungsrunge (1) nach Anspruch 1, bei der wenigstens dasjenige Rungenteil (25) als Hohlprofil ausgebildet ist, in dem das andere Rungenteil (30) teleskopierbar geführt ist, wobei der minimale Überlappungsbereich (40) der beiden teleskopierbaren Rungenteile (25, 30) 100 mm nicht unterschreitet..

3. Ladungssicherungsrunge (1) nach Anspruch 1 oder 2, bei der wenigstens ein Federelement (45), wie eine Druckfeder oder eine Zugfeder, die beiden Rungenteile (25, 30) in deren Längsrichtung voneinander wegdrückt oder zusammenzieht.

4. Ladungssicherungsrunge (1) nach Anspruch 3, bei der das wenigstens eine Federelement (45) an seinem unteren Endbereich (46) an dem unteren Rungenteil (25) in Längsrichtung fixiert gehalten ist und an seinem oberen Endbereich (47) an dem oberen Rungenteil (30) in Längsrichtung fixiert gehalten ist.

5. Ladungssicherungsrunge (1) nach einem der voranstehenden Ansprüche, bei der die wenigstens eine Lochreihe (35) mehrere übereinander angeordnete schlüssellochförmige Anschlaglöcher (36) umfasst.

6. Ladungssicherungsrunge (1) nach einem der voranstehenden Ansprüche, bei dem das untere und/oder obere Befestigungselement (27, 32) haken- oder pilzförmig ausgebildet ist.

7. Ladungssicherungsrunge (1) nach Anspruch 6, bei der das untere und/oder obere Befestigungselement (27, 32) ein in Bezug zur Längsrichtung der Ladungssicherungsrunge (1) winkelig abstehendes Bolzenstück (33) und ein an dem äußeren Bolzenstückende fest angebrachtes Tellerelement (34) umfasst, das einen größeren Durchmesser (a) aufweist als das Bolzenstück (33).

8. Anschlagmittel (5), mit:
- einer Ringöse (50), und
- wenigstens einem mit der Ringöse (50) fest verbundenen Einhängeelement (55), das zum lösbaren Ein- und Aushängen in ein Anschlagloch (36) einer Ladungssicherungsrunge (1) nach einem oder mehreren der voranstehenden Ansprüche ausgebildet ist.

9. Anschlagmittel (5) nach Anspruch 8, bei dem wenigstens zwei Einhängeelemente (55) derart im Abstand zueinander übereinander angeordnet sind, dass die Einhängeelemente (55) in zwei benachbarte Anschlaglöcher (36) der Ladungssicherungsrunge (1) einführbar sind und durch Bewegen in Richtung nach unten zur Längsrichtung der Ladungssicherungsrunge (1) verhaken.

10. Ladungssicherungssystem (60), mit:
- wenigstens einer Ladungssicherungsrunge (1) nach einem oder mehreren der voranstehenden Ansprüche 1 bis 7, und
- wenigstens einem Anschlagmittel (5) nach einem der Ansprüche 8 bis 9.

11. Nutzfahrzeug mit:
- einem Ladeboden (70), an dessen Längsseiten eine oder mehrere Bodenanschlagleisten (21) mit Bodenanschlagleistenlöchern (22) vorhanden sind,
- einem Dach (65), an dessen Längsseiten ein oder mehrere Dachanschlagleisten (23) mit Dachanschlagleistenlöcher (24) vorhanden sind, und
- wenigstens einer Ladungssicherungsrunge (1) nach einem oder mehreren der Ansprüche 1 bis 7, deren unteres Befestigungselement (27) zum lösbaren Befestigen in einem der Bodenanschlagleistenlöcher (22) ausgebildet ist und deren oberes Befestigungselement (32) zum lösbaren Befestigen in einem der Dachanschlagleistenlöcher (24) ausgebildet ist.

12. Nutzfahrzeug nach Anspruch 11, das ferner ein oder mehrere Anschlagmittel nach Anspruch 8 oder 9 umfasst.

13. Nutzfahrzeug nach Anspruch 11 oder 12, ferner mit:
- einer Wand (80), wie eine Seitenwand oder eine Hecktür des Nutzfahrzeugs, die eine obere Lochreihe (81) mit Löchern zum lösbaren Befestigen eines oberen Befestigungselements (32) einer Ladungssicherungsrunge (1) aufweist und eine untere Lochreihe (82) mit Löchern zum lösbaren Befestigen eines unteren Befestigungselements (27) einer Ladungssicherungsrunge (1) aufweist.
